# EUROPEAN PATENT APPLICATION

(11) **EP 1 081 879 A1**
(43) Date of publication of application: **07.03.2001**
(21) Application number: 99117528.2
(22) Date of filing: 04.09.1999
(51) Int. Cl.: H04B 7/26

(54) **Communication system for mobile stations in radio frequency shielded areas**

(71) Applicant: MOTOROLA, INC., Schaumburg, IL 60196 (US)
(72) Inventor: Berger-Karius, Andreas, 13465 Berlin (DE)
(74) Representative: Richardt, Markus Albert

(57) **Abstract**

The present invention refers to a communication system transmitting radio frequency (RF) signals to at least one communication unit (13) placed in a RF shielded area (1) comprising a first rebroadcast/converter unit (4) which receives RF communication signals (3) at a first RF frequency (f₁) from outside the RF shielded area, converts said received signals to link signals (5) at a second RF frequency (f₂) and transmits said link signals into said RF shielded area (1); and a second rebroadcast/converter unit (9, 11) which receives the link signals (5) at said second RF frequency (f₂), reconverts said link signals to said communication signals (3') at said first RF frequency (f₁) and transmits said communication signals at least into said RF shielded area (1). The present invention provides the advantage that mobile stations, can be operate in RF shielded areas without losses of communication quality or operational safety.

## Description

The present invention relates in general to communication systems for mobile communication services and more particularly to communication systems that serve at least one communication unit or mobile station (mobile subscriber unit) in a radio frequency (RF) shielded area e.g. tunnel.

Numerous communication systems have been proposed and a number of such systems are currently in operation around the world. A plurality of communication systems has to fulfil the need to deliver information to mobile stations, e.g. mobile telephones, pagers etc.

Conventional radio systems for mobile communication use frequency bands of approximate 150 MHz. Such systems own the problem that the carrier frequency is subject to high losses if the propagation environment is different to free space area. In addition, the propagation characteristics vary in such environments, hereinafter referred too as RF shielded areas. For conventional radio systems, the losses are approximate 13 dB / 30 m at a frequency band of 150 MHz. Thus for mobile stations positioned into a RF shielded area the reception quality are often unacceptable and it is impossible to build up a stabile radio connection to a basis station outside the RF shielded area.

Some communication systems uses a physical backhaul system to provide mobile stations in RF shielded areas with necessary RF signals and to transmit signals sent by the mobile stations to a rebroadcast unit which retransmit said signals to a base station or to a mobile station outside the RF shielded area. Four wires, coaxial or fibre optic cables are required for creating the physical backhaul. The expenses to build up such a physical backhaul system are high and frequently the constructive conditions do not allow the use of physical backhaul. Physical backhaul systems are used for instance in tunnels or underground facilities. However a physical backhaul system is not available during the construction phase of a tunnel, before installing a planned tunnel or after an incident, in that the existing communication system was destroyed.

Other known communication systems used in specific applications comprise frequency converters to work in a higher frequency band than in free atmosphere. However special mobile stations are required which are different from conventional radiotelephones or the like. Thus, two separate radiosets are required for endusers.

Accordingly, there is a need for a communication system which can replace physical backhaul systems in RF shielded areas. An object of the present invention is to improve the use of current mobile stations, e.g. radiotelephones, employed in RF shielded areas.

According to the present invention, a communication system is provided as recited in claim 1. This communication system provides the advantage that communication units, especially mobile stations, can be operate in RF shielded areas without losses of communication quality or operational safety. Furthermore, the invention avoids the risk of destruction of physical backhaul systems in response to incidents in tunnels or the like.

A preferred embodiment uses a second frequency in a higher frequency band than the frequency for ordinary radiotelephones for the link signals because higher frequencies with much shorter wave lengths are better transmitted due to the wave guide effect inside of a tunnel and other underground areas.

An adapted embodiment of the present invention is distinguished by that said second rebroadcast/converter unit that retransmits said link signals at said second RF frequency and transmits said link signals into said RF shielded area. As a result, the communication signals can transfer deeper into underground buildings.

In a more preferred embodiment said rebroadcast/converter units are capable of receive communication signals from a mobile station at said first RF frequency, convert said signals to link signals and transmit the link signals to an adjacent rebroadcast/converter unit. In this way communication connections can built up in two directions.

The features of the invention are set forth with particularity in the appended claims. The invention itself, together with its further objects and advantages thereof, may be best understood by reference to the following description when taken in conjunction with the accompanying drawing, wherein:

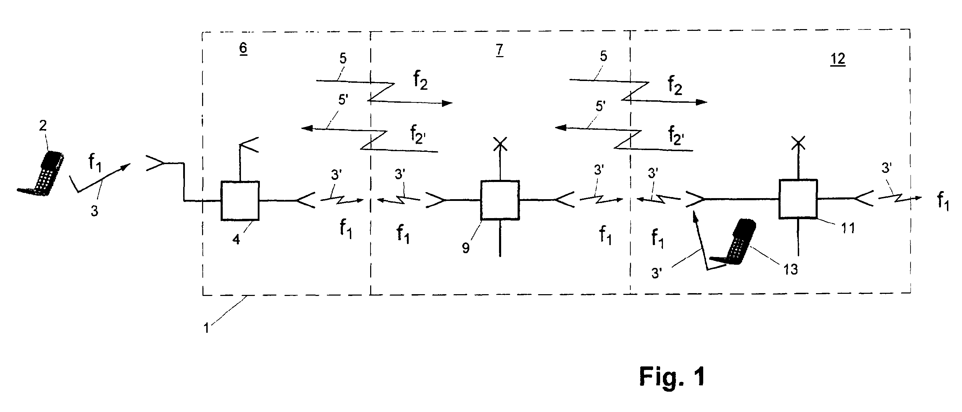

- Fig. 1: is a block diagrams of a communication system in RF shielded areas with a RF backhaul.

Fig. 1 illustrates a preferred embodiment of a communication system transmitting radio frequency (RF) signals in a RF shielded area. This RF shielded area is in the depicted embodiment a tunnel 1 but could be any underground area. The communication system according to the invention could employ as in-house system when the RF shielded area is a building.

A first mobile station 2 (or a base station) is placed outside of the RF shielded area 1. The first mobile station 2 transmits ordinary communication signals 3 at a first frequency band f₁. A first rebroadcast/converter unit 4 placed on entrance of the tunnel 1 receives the communication signals 3, converts said signals to link signals 5 at a second frequency band f₂ and retransmit said link signals 5 into the tunnel 1. In addition, the first rebroadcast/converter unit 4 retransmits the communication signals 3' at the first frequency band f₁ into the tunnel 1 also. The first frequency band f₁ could be in the conventional range of 150 MHz for radiotelephones. Because the signal losses inside the tunnel 1 are high (app. 13 dB / 30 m) the communication signals at frequency f₁ reach only a first portion 6 of the tunnel 1. However the link signals 5 arrive a second portion 7 of the tunnel because the losses at the second frequency are lower if the second frequency is higher, i.e. 450 MHz (losses: app. 6 dB / 30 m).

Each rebroadcast/converter unit consists at least of a receiver portion, a converter portion and a transmitter portion, which is capable to transmit signals at the first and the second frequency both. Furthermore, a battery can intend for an emergency operation if the power supply was destroyed by an incident inside the tunnel.

Inside of the tunnel 1, in the field of said second portion 7, a second rebroadcast/converter unit 9 is positioned for receiving the link signals 5 from said first rebroadcast/converter unit 4. The second rebroadcast/converter unit 9 reconverts the link signals 5 and transmits the recovered communication signals 3' at the first frequency f₁ within the second portion 7 of the tunnel 1. Simultaneously the second rebroadcast/converter unit 9 retransmits the received link signals 5 at the second frequency f₂.

Consequently a third rebroadcast/converter unit 11 positioned in the range of said second rebroadcast/converter unit 9 receives the link signals 5. The third rebroadcast/converter unit 11 converts the link signals 5 to the communication signals 3' and retransmits said communication signals too, but in a third portion 12 of the tunnel 1. Therefore, the communication signals 3' are sent in the whole RF shielded area of the tunnel 1. As a result a second mobile radiotelephone 13 receive the communication signals 3' and a communication can built up between the first and the second radiotelephone if desired. The third rebroadcast/converter unit 11 is located near the end of the tunnel so that the communication signals 3' at the first frequency can transmitted to an extern mobile station or base station (not shown) outside of the tunnel 1.

Of course the rebroadcast/converter units 4, 9, 11 are capable to receive communication signals at the first frequency f₁ from one or more communication units 13 within the tunnel 1. Thus signals from mobile stations 13 inside the RF shielded area are proceeded in the vice versa way. The rebroadcast/converter units receive communication signals 3 from radiotelephones 13 at the first frequency f₁ inside the tunnel, convert these signals to link signals 5' at a higher frequency band f₂, and retransmit the link signals 5' to adjacent rebroadcast/converter units.

Dependent on extent of the RF shielded area one or a plurality of rebroadcast/converter units is necessary to supply the needed communication signals into the whole RF shielded area. A plurality of rebroadcast/converter units is bridged together via RF links with a shorter wave length (higher frequency).

| **List of reference signs** | |
|---|---|
| **reference sign** | **feature** |
| 1 | tunnel |
| 2 | first mobile station |
| 3 | communication signals |
| 3' | recovered communication signals |
| 4 | first rebroadcast/converter unit |
| 5, 5' | link signals |
| 6 | first portion of the tunnel |
| 7 | second portion of the tunnel |
| | |
| 9 | second rebroadcast/converter unit |
| | |
| 11 | third rebroadcast/converter unit |
| 12 | third portion of the tunnel |
| 13 | second mobile station/radiotelephone |
| | |
| | |
| f₁ | first frequency band |
| f₂ | second frequency band |

## Claims

1. A communication system transmitting radio frequency (RF) signals to at least one communication unit (13) placed in a RF shielded area (1) comprising:
• a first rebroadcast/converter unit (4) which receives RF communication signals (3) at a first RF frequency (f₁) from outside the RF shielded area, converts said received signals to link signals (5) at a second RF frequency (f₂) and transmits said link signals into said RF shielded area (1); and
• a second rebroadcast/converter unit (9, 11) which receives the link signals (5) at said second RF frequency (f₂), reconverts said link signals to said communication signals (3') at said first RF frequency (f₁) and transmits said communication signals at least into said RF shielded area (1).

2. The communication system according to claim 1, characterised in that said second RF frequency (f₂) is situated into a higher frequency band than said first RF frequency (f₁).

3. The communication system according to claim 1 or 2, characterised in that further said first rebroadcast/converter unit (4) retransmits the communication signals (3') at said first RF frequency (f₁) into said RF shielded area (1, 6).

4. The communication system according to any preceding claim, further characterised in that said second rebroadcast/converter unit (9) retransmits said link signals (5) at said second RF frequency (f₂) and transmits said link signals into said RF shielded area (1, 7, 12).

5. The communication system according to any preceding claim comprising a plurality of rebroadcast/converter units (4, 9, 11) placed at least partially into said RF shielded area (1).

6. The communication system according to any preceding claim, characterised in that at least said first rebroadcast/converter unit (4) is placed near the boundary between said RF shielded area (1) and outside.

7. The communication system according to any preceding claim, characterised in that said rebroadcast/converter unit (4, 9, 11) are capable of receive communication signals from a mobile station (13) placed inside the RF shielded area (1) at said first RF frequency (f₁), converts said received signals to link signals (5') at said second RF frequency (f_{2'}) and transmits said link signals to an adjacent rebroadcast/converter unit.

8. The communication system according to any preceding claim, further characterised in that said first rebroadcast/converter unit (4, 11) are capable of receive communication signals (3) from a base station outside the RF shielded area (1).

9. The communication system according to any preceding claim, characterised in that said communication system is applied to an underground building (1, 6, 7, 12).

10. The communication system according to any of claims 1-8, characterised in that said communication system is applied to an in-house communication network.
